(19) Europäisches Patentamt
European Patent Office
Office européen des brevets

(11) **EP 3 492 950 B1**

(12) **FASCICULE DE BREVET EUROPEEN**

(45) Date de publication et mention
de la délivrance du brevet:
**21.07.2021  Bulletin 2021/29**

(51) Int Cl.:
***G01T 1/40*** *(2006.01)*

(21) Numéro de dépôt: **18209998.6**

(22) Date de dépôt: **04.12.2018**

(54) **PROCÉDÉ D'ÉTALONNAGE D'UN SPECTROMETRE GAMMA, SYSTÈME D'ÉTALONNAGE ET ENSEMBLE DE SPECTROMETRIE GAMMA ASSOCIÉS**

VERFAHREN ZUR KALIBRIERUNG EINES GAMMASPEKTROMETERS, ENTSPRECHENDES KALIBRIERUNGSSYSTEM UND ENTSPRECHENDE GAMMASPEKTROMETRIEEINHEIT

METHOD FOR CALIBRATION OF A GAMMA SPECTROMETER, ASSOCIATED CALIBRATION SYSTEM AND GAMMA SPECTROMETRY ASSEMBLY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **04.12.2017  FR 1761604**

(43) Date de publication de la demande:
**05.06.2019  Bulletin 2019/23**

(73) Titulaire: **Commissariat à l'énergie atomique et aux énergies alternatives 75015 Paris (FR)**

(72) Inventeurs:
• **LECOMTE, Quentin 78280 GUYANCOURT (FR)**
• **COULON, Romain 58400 CHAULGNES (FR)**
• **DUMAZERT, Jonathan 30100 ALES (FR)**

(74) Mandataire: **Brevalex 95, rue d'Amsterdam 75378 Paris Cedex 8 (FR)**

(56) Documents cités:
**EP-A1- 0 965 861          WO-A1-2007/085060 WO-A1-2016/156882**

• **R W Sloof: "Luminescence Properties of NaI:Tl and CeBr 3 with New Co- dopants", , 28 September 2016 (2016-09-28), XP055703536, Retrieved from the Internet: URL:https://repository.tudelft.nl/islandor a/object/uuid%3Aa9de6753-8103-49d7-8eb2-7f 85ed7d88e9 [retrieved on 2020-06-10]**

EP 3 492 950 B1

**Description**

**DOMAINE TECHNIQUE**

La présente invention concerne un procédé d'étalonnage d'un spectromètre gamma à scintillateur.

L'invention concerne également un procédé de mesure d'un spectre gamma, un système d'étalonnage et un ensemble de spectrométrie comprenant un tel système d'étalonnage.

L'invention s'applique au domaine de la spectroscopie gamma, notamment fondée sur des matériaux de scintillation inorganiques.

**ÉTAT DE LA TECHNIQUE ANTÉRIEURE**

La spectrométrie gamma est généralement utilisée pour quantifier et identifier des radionucléides, notamment en mesurant l'énergie du rayonnement gamma émis par lesdits radionucléides. Il est connu d'avoir recours à des spectromètres gamma pour réaliser une telle spectroscopie gamma.

De façon classique, un spectromètre gamma comporte un scintillateur, comportant un matériau de scintillation (organique ou inorganique), associé à un dispositif de conversion photo/électron à gain.

Au sein du scintillateur, l'absorption, par le matériau de scintillation, des photons formant le rayonnement gamma, conduit à l'excitation du matériau de scintillation. Puis, le matériau de scintillation se désexcite en émettant des photons de fluorescence, généralement dans une gamme d'énergie plus faible que celle des photons gamma reçus.

Le dispositif de conversion est configuré pour collecter les photons de fluorescence émis par le scintillateur, et pour générer un signal électrique dont les caractéristiques sont représentatives des caractéristiques du rayonnement gamma absorbé par le scintillateur.

L'iodure de sodium dopé au thallium NaI(Tl), le bromure de lanthane activé au cérium $LaBr_3(Ce)$ ou encore l'iodure de césium dopé au thallium CsI(Tl) constituent des exemples de matériaux de scintillation inorganiques utilisés pour la spectroscopie gamma. De tels matériaux de scintillation présentent de nombreux avantages, parmi lesquels un faible coût de production et un faible encombrement.

Toutefois, de tels matériaux de scintillation présentent une réponse qui dépend de leur température. Plus précisément, pour une même source de rayonnement gamma, et pour un même scintillateur, le spectre des photons de fluorescence émis par le scintillateur varie en fonction de la température du scintillateur, ce qui nuit à une mesure reproductible et fiable de l'énergie du rayonnement gamma.

Avec de tels matériaux de scintillation, un étalonnage préalable à la mesure d'un spectre gamma est donc requis.

L'étalonnage d'un spectromètre gamma est, par exemple, décrit par R. Shepard et al. dans leurs travaux publiés dans le journal scientifique « IEEE transactions on nuclear science », volume 44, numéro 3, pages 568 à 571. L'étalonnage d'un spectromètre gamma en utilisant une source ultraviolet est aussi décrit dans EP 0 965 861 A1.

Dans ce procédé, un spectromètre gamma embarque un échantillon l'américium 241 [241]Am. Le spectre d'émission de l'américium 241 $^{241}$Am comporte un pic à 3,3 MeV (mégaélectronvolt) correspondant à une émission de particules alpha. Un tel pic est utilisé comme référence pour déterminer une fonction de correction applicable aux spectres mesurés par ledit spectromètre gamma.

Néanmoins, un tel procédé d'étalonnage ne donne pas entière satisfaction.

En effet, un tel procédé requiert l'utilisation d'une source radioactive, à savoir l'américium 241 [241]Am. Or, l'utilisation de matière radioactive se heurte à des réglementations strictes qui rendent la mise en œuvre d'un tel procédé d'étalonnage difficile. En outre, le recours à une telle source radioactive s'accompagne d'un danger potentiel pour la santé des utilisateurs.

Un but de l'invention est donc de proposer un procédé d'étalonnage qui soit plus simple et plus sûr à mettre en œuvre.

**EXPOSÉ DE L'INVENTION**

A cet effet, l'invention a pour objet un procédé tel que décrit dans la revendication 1, comportant :

- émission, à destination du spectromètre gamma, d'un rayonnement UV sous forme d'impulsions de photons dans lequel, pour chaque impulsion de photons, chaque photon présente une énergie supérieure ou égale à une énergie d'ionisation du scintillateur, les impulsions de photons étant aptes à générer, lors de leur réception par le spectromètre gamma, un spectre présentant au moins un pic d'intérêt à une énergie de référence correspondante ;
- à partir d'un courant de scintillation résultant d'une détection des impulsions de photons par le spectromètre gamma, calcul d'un spectre présentant chaque pic d'intérêt à une énergie mesurée correspondante ;
- pour chaque pic d'intérêt, première comparaison de l'énergie mesurée correspondante avec l'énergie de référence correspondante ; et
- à partir du résultat de la première comparaison, détermination d'un gain du spectrogramme gamma pour faire correspondre, pour chaque pic d'intérêt, l'énergie mesurée correspondante avec l'énergie de référence correspondante.

En effet, le recours à un rayonnement UV dans lequel l'énergie des photons est supérieure ou égale à une énergie d'ionisation du scintillateur place le scintillateur dans un état excité identique à l'état excité dans lequel se trouverait le scintillateur suite à son exposition à des photons gamma. Une source radioactive n'est donc plus requise pour entraîner une excitation du scintillateur.

Les photons gamma présentant des énergies de plusieurs ordres de grandeur supérieures aux énergies des photons UV, le recours à des impulsions de photons comportant une pluralité de photons (de l'ordre du million de photons UV par impulsion) entraîne l'absorption, par le scintillateur, d'une énergie équivalente à l'énergie qu'absorberait le scintillateur s'il recevait des photons gamma.

En outre, l'envoi d'impulsions de photons UV contrôlées se traduit par la génération, par le spectromètre gamma, d'un courant de scintillation dont le spectre est supposé présenter au moins un pic d'intérêt à une énergie de référence correspondante.

Or, la réponse du spectromètre gamma est fonction de sa température (en particulier, la désexcitation du scintillateur est fonction de sa température), il en résulte que la comparaison de l'énergie mesurée de chaque pic d'intérêt dans le spectre du courant de scintillation avec l'énergie de référence correspondante confère la possibilité de corriger, en temps réel, les fluctuations du gain du spectromètre gamma dues à la température, et ce sans recourir à des sources radioactives, ni à mesurer les fluctuations de température du spectromètre gamma.

Suivant d'autres aspects avantageux de l'invention, le procédé comporte une ou plusieurs des caractéristiques suivantes, prise(s) isolément ou suivant toutes les combinaisons techniquement possibles :

- le gain est proportionnel à un gain de référence prédéterminé, divisé par un coefficient de correction qui est représentatif du résultat de la première comparaison ;
- le procédé d'étalonnage comporte, en outre :

  • prélèvement d'une partie du rayonnement UV ;
  • à partir d'un signal de référence résultant d'une détection, par un photodétecteur distinct du spectromètre gamma, de la partie du rayonnement UV prélevée, calcul de la valeur d'au moins une grandeur représentative du nombre de photons présents dans chaque impulsion de photons ;
  • pour chaque grandeur représentative, deuxième comparaison de la valeur calculée correspondante avec une valeur prédéterminée correspondante ;
  • détermination d'un coefficient de normalisation représentatif d'un résultat de la deuxième comparaison ;

  le gain étant, lors de la détermination du gain du spectrogramme gamma, pris égal à un gain de référence prédéterminé, divisé par un coefficient de correction qui est représentatif du résultat de la première comparaison, et multiplié par un coefficient de normalisation qui est représentatif du résultat de la deuxième comparaison.

En outre, l'invention a pour objet un procédé de mesure d'un spectre gamma d'une source de rayonnement gamma au moyen d'un spectromètre gamma à scintillateur, tel que décrit dans la revendication 4, le procédé comprenant les étapes :

- détermination d'un gain du spectromètre gamma par la mise en œuvre d'un procédé d'étalonnage tel que défini ci-dessus ;
- réception, par le spectromètre gamma, du rayonnement gamma émis par la source ;
- mise en œuvre du gain déterminé pour calculer un spectre gamma de la source.

En outre, l'invention a pour objet un système d'étalonnage d'un spectromètre gamma à scintillateur, tel que décrit dans la revendication 5, le système d'étalonnage comportant un dispositif optique d'excitation et un calculateur,

le dispositif optique d'excitation étant configuré pour émettre, à destination du spectromètre gamma, un rayonnement UV sous forme d'impulsions de photons dans lequel, pour chaque impulsion de photons, chaque photon présente une énergie supérieure ou égale à une énergie d'ionisation du scintillateur, les impulsions de photons étant aptes à générer, lors de leur réception par le spectromètre gamma, un spectre présentant au moins un pic d'intérêt à une énergie de référence correspondante,

le calculateur étant configuré pour :

• calculer, à partir d'un courant de scintillation résultant d'une détection des impulsions de photons par le spectromètre gamma, un spectre présentant chaque pic d'intérêt à une énergie mesurée correspondante ;
• mettre en œuvre, pour chaque pic d'intérêt, une première comparaison de l'énergie mesurée correspondante avec l'énergie de référence correspondante ; et
• déterminer, à partir du résultat de la première comparaison, un gain du spectrogramme gamma pour faire correspondre, pour chaque pic d'intérêt, l'énergie mesurée correspondante avec l'énergie de référence correspondante.

Suivant d'autres aspects avantageux de l'invention, le système d'étalonnage comporte une ou plusieurs des caractéristiques suivantes, prise(s) isolément ou suivant toutes les combinaisons techniquement possibles :

- le gain est proportionnel à un gain de référence prédéterminé, divisé par un coefficient de correction qui

5        **EP 3 492 950 B1**        6

est représentatif du résultat de la première comparaison ;

- le dispositif optique d'excitation comporte un photodétecteur configuré pour prélever une partie du rayonnement UV et pour générer un signal de référence résultant d'une détection de la partie du rayonnement UV prélevée,

le calculateur étant également configuré pour :

- calculer, à partir du signal de référence, la valeur d'au moins une grandeur représentative du nombre de photons présents dans chaque impulsion de photons ;
- mettre en œuvre, pour chaque grandeur représentative, une deuxième comparaison de la valeur calculée correspondante avec une valeur prédéterminée correspondante ;
- déterminer un coefficient de normalisation représentatif d'un résultat de la deuxième comparaison ;

le gain étant pris égal à un gain de référence prédéterminé, divisé par un coefficient de correction qui est représentatif du résultat de la première comparaison, et multiplié par le coefficient de normalisation ;

- le calculateur est configuré pour :

- recevoir, en provenance du spectromètre gamma, un courant de scintillation résultant d'une détection, par le spectromètre gamma, d'un rayonnement gamma émis par une source de rayonnement gamma ;
- calculer un spectre gamma de la source à partir du courant de scintillation reçu.

En outre, l'invention a pour objet un ensemble de spectrométrie gamma comportant un spectromètre gamma et un système d'étalonnage tel que défini ci-dessus, une entrée du calculateur étant reliée à une sortie du spectromètre gamma.

## BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :

- la figure 1 est une représentation schématique d'un ensemble de spectrométrie gamma selon l'invention ;
- la figure 2 est un diagramme d'énergie simplifié d'un scintillateur de l'ensemble de spectrométrie gamma de la figure 1 ; et
- la figure 3 est une représentation schématique d'une unité de traitement de l'ensemble de spectrométrie gamma de la figure 1.

## EXPOSÉ DÉTAILLÉ DE MODES DE RÉALISATION PARTICULIERS

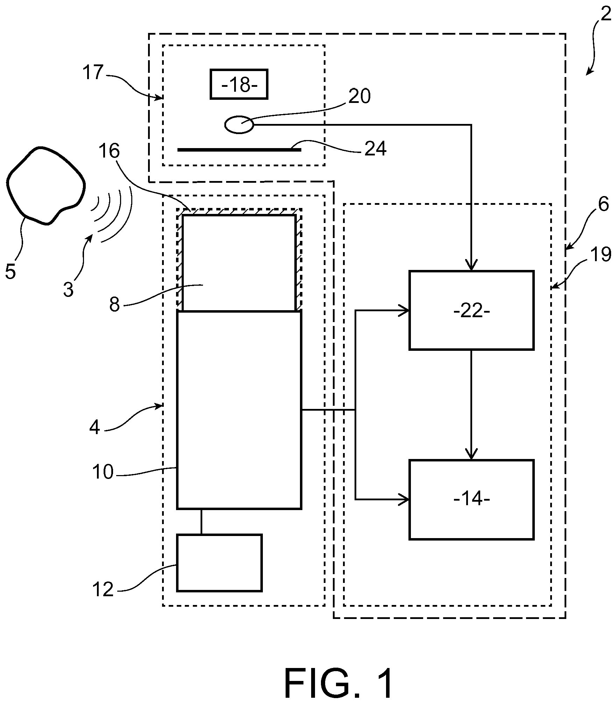

Un ensemble de spectrométrie gamma 2 selon l'invention est représenté sur la figure 1.

L'ensemble de spectrométrie gamma 2 est configuré pour déterminer un spectre d'un rayonnement gamma 3 émis par une source 5. En particulier, l'ensemble de spectrométrie gamma 2 est configuré pour mettre en œuvre une correction des effets d'une dérive en température de composants de l'ensemble de spectrométrie gamma 2 lors de la détermination du spectre du rayonnement gamma 3 émis par la source 5.

Par « spectre », il est entendu, au sens de la présente invention, une distribution en énergie.

L'ensemble de spectrométrie gamma 2 comporte un spectromètre gamma 4 et un système d'étalonnage 6.

Le spectromètre gamma 4 est adapté pour recevoir un rayonnement gamma 3 en provenance de la source 5 et pour calculer le spectre du rayonnement gamma 3.

Le système d'étalonnage 6 est configuré pour permettre une correction des effets d'une dérive en température du spectromètre gamma 4 sur une réponse du spectromètre gamma 4.

Le spectromètre gamma 4 comporte un scintillateur 8 couplé à un convertisseur électronique 10 et une source d'alimentation 12.

Le scintillateur 8 est adapté pour absorber des particules ionisantes d'un rayonnement ionisant, par exemple des photons gamma du rayonnement gamma 3, et pour émettre des photons, notamment par fluorescence.

Le convertisseur électronique 10 est un convertisseur électronique à gain configuré pour capter les photons émis par le scintillateur 8, et pour délivrer en sortie un courant électrique, dit « courant de scintillation », représentatif de la détection des photons émis par le scintillateur 8.

La source d'alimentation 12 est configurée pour polariser le convertisseur électronique 10. La source d'alimentation 12 est, par exemple, une source de tension.

Le scintillateur 8 et le convertisseur électronique 10 vont maintenant être décrits plus en détail.

Le scintillateur 8 est organique ou inorganique, intrinsèque ou extrinsèque.

Par « scintillateur extrinsèque », il est entendu, au sens de la présente invention, un scintillateur formé d'une matrice (polymérique dans le cas d'un scintillateur organique, ou cristalline dans le cas d'un scintillateur inorganique) dans laquelle sont incorporés des centres d'activation, distincts de la matrice, destinés à émettre des photons de fluorescence suite à l'absorption d'un rayonnement ionisant par le scintillateur 8. De tels centres d'activation sont de nature chimique différente par rapport à la matrice.

L'iodure de sodium dopé au thallium NaI(TI), le bromure de lanthane activé au cérium LaBr$_3$(Ce) ou encore l'iodure de césium dopé au thallium CsI(TI) sont des exemples de matériaux pour la réalisation de scintillateurs extrinsèques. Dans ces exemples, le thallium et le cérium jouent le rôle de centre d'activation.

Par « scintillateur intrinsèque », il est entendu, au sens de la présente invention, un scintillateur formé d'une matrice apte à absorber un rayonnement ionisant et à émettre des photons en conséquence, sans que l'inclusion de centres d'activation distincts des composants constituant la matrice ne soit requise par ailleurs. Dans ce cas, ce sont des atomes, des molécules ou des défauts de la matrice qui sont responsables de l'émission de photons par fluorescence du scintillateur 8.

Le germanate de bismuth BGO ou le fluorure de baryum BaF$_2$ sont des exemples de matériaux pour la réalisation de scintillateurs intrinsèques.

Par la suite, l'expression « atomes du scintillateur» désignera indifféremment les centres d'activation d'un scintillateur extrinsèque et les atomes, molécules ou défauts responsables de l'émission de photons par fluorescence dans un scintillateur intrinsèque. Dans ces conditions, et dans le cas particulier des scintillateurs intrinsèques, le terme « matrice » désignera la partie du scintillateur 8 autre que les atomes, les molécules ou les défauts responsables de l'émission de photons par fluorescence du scintillateur 8.

De façon connue, le scintillateur 8 est configuré pour émettre au moins un photon lors de l'interaction d'une particule ionisante avec le scintillateur 8.

Les photons émis par le scintillateur 8 sont destinés à être collectés par le convertisseur électronique 10 pour la génération du courant de scintillation.

Le convertisseur électronique 10 est configuré pour délivrer, lors de la réception d'un photon émis par le scintillateur 8, un courant de scintillation comportant une impulsion électrique représentative de la détection dudit photon par le convertisseur électronique 10.

L'expression « impulsion » concerne exclusivement le courant de scintillation. L'expression « impulsion de photons », utilisée par la suite, est relative aux photons émis par une source UV du système d'étalonnage 6, décrite ultérieurement.

Le convertisseur électronique 10 présente une résolution temporelle appelée « temps d'intégration ». Le temps d'intégration du convertisseur électronique 10 est généralement de l'ordre de la nanoseconde.

Le convertisseur électronique 10 est tel que la réception, par le convertisseur électronique 10, de photons successivement séparés dans le temps par une durée inférieure au temps d'intégration du convertisseur électronique 10 se traduit par la présente d'une unique impulsion dans le courant de scintillation représentative d'une telle réception. On notera que cette unique impulsion est caractéristique du nombre de photons reçus et qui sont séparés par une durée inférieure au temps d'intégration.

Le convertisseur électronique 10 est, par exemple, un photomultiplicateur ou une photodiode à avalanche. Dans le cas où le convertisseur électronique 10 est un photomultiplicateur, la source d'alimentation 12 est, de préférence, une source haute tension, avantageusement stabilisée.

Le convertisseur électronique 10 est connecté à une entrée d'une unité de calcul 14 du système d'étalonnage 6, décrite ultérieurement, pour la transmission du courant de scintillation à l'unité de calcul 14.

Le convertisseur électronique 10 est également connecté à une première entrée d'une unité traitement 22 du système d'étalonnage 6, décrite ultérieurement, pour la transmission du courant de scintillation à l'unité de traitement 22.

Avantageusement, le spectromètre gamma 4 comporte, en outre, un réflecteur 16 recouvrant le scintillateur 8.

Le réflecteur 16 est destiné à isoler le scintillateur 8 des photons extérieurs susceptibles de se superposer aux photons émis par le scintillateur 8. Un tel réflecteur 16 est également destiné à renvoyer les photons émis par le scintillateur 8 en direction du convertisseur électronique 10, de façon à accroître la collecte de photons émis par le scintillateur 8 par le convertisseur électronique 10.

Un tel réflecteur 16 est, par exemple, réalisé en polytétrafluoroéthylène PTFE, également connu sous le nom commercial « Teflon », ou en dioxyde de titane TiO$_2$.

Avantageusement, le spectromètre gamma 4 comporte également une couche opaque (non représentée) recouvrant au moins partiellement la partie du convertisseur électronique 10 qui n'est pas destinée à recevoir les photons émis par le scintillateur 8.

La couche opaque est destinée à empêcher des photons provenant de l'environnement autour du convertisseur électronique 10, autres que les photons émis par le scintillateur 8, de parvenir au convertisseur électronique 10.

Par exemple, dans le cas où le convertisseur électronique 10 est un photomultiplicateur, la couche opaque est un film de polytéréphtalate d'éthylène réfléchissant, également connu sous le nom commercial « Mylar ».

Le système d'étalonnage 6 comporte un dispositif optique d'excitation 17 et un calculateur 19.

Le dispositif optique d'excitation 17 comporte une source UV 18 et un photodétecteur 20.

La source UV 18 est configurée pour émettre un rayonnement présentant une longueur d'onde prédéterminée.

Le photodétecteur 20 est adapté pour collecter une partie du rayonnement émis par la source UV 18, et pour délivrer un signal de référence résultant d'une détection de ladite partie du rayonnement émis par la source UV 18.

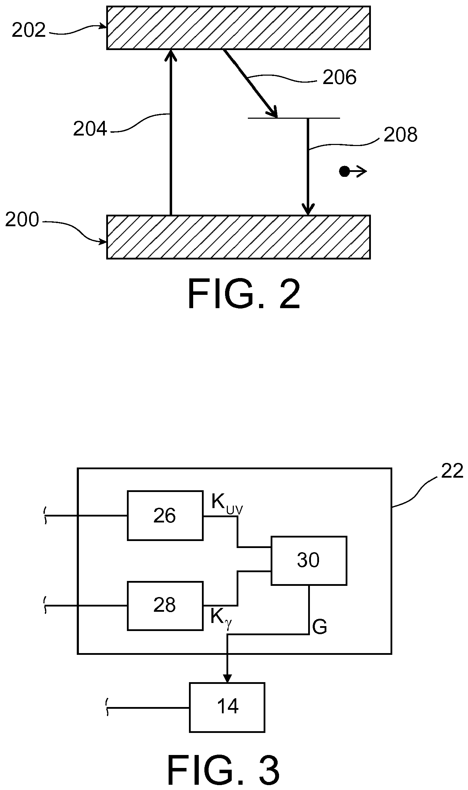

La source UV 18 et le photodétecteur 20 vont maintenant être décrits plus en détail, en référence aux figures 2 et 3.

La source UV 18 est propre à émettre des rayonnements appartenant au domaine ultraviolet, de préférence appartenant au domaine ultraviolet lointain (classiquement appelée « domaine UV-C »), de préférence encore présentant une longueur d'onde inférieure ou égale 200 nm (nanomètre).

En particulier, la source UV 18 est configurée pour émettre des photons dont l'énergie est supérieure ou égale à un seuil d'énergie dépendant du scintillateur 8. Plus précisément, la source UV 18 est configurée pour émettre des photons dont l'énergie est supérieure ou égale à une énergie d'ionisation du scintillateur 8.

L'énergie d'ionisation du scintillateur 8 est définie comme étant une énergie minimale pourfaire passer un électron de la bande de valence 200 d'un composant de la matrice du scintillateur 8 vers la bande de conduction 202 du composant de la matrice.

L'énergie des photons des rayonnements émis par la source UV 18 est, en outre, supérieure ou égale à une énergie d'ionisation des atomes du scintillateur.

Comme illustré par la figure 2, une telle condition sur la source UV 18 se traduit, lors de l'absorption, par le scintillateur 8, des rayonnements émis par la source UV 18, par le passage par ionisation 204 de la matrice du scintillateur 8 dans un état excité. Un tel état excité est identique à l'état excité dans lequel se trouve le scintillateur 8 suite à son exposition à des photons gamma.

Depuis un tel état excité, par le biais de l'émission 206 d'excitons au sein de la matrice du scintillateur 8, un transfert d'énergie s'opère de la matrice du scintillateur 8 vers les atomes du scintillateur. Puis, les atomes du scintillateur reviennent à un état fondamental correspondant par une émission 208 d'un photon.

Par conséquent, l'utilisation d'une telle source UV 18 autorise la stimulation de la fluorescence du scintillateur 8 du spectromètre gamma 4 par ionisation, c'est-à-dire suivant le même principe physique que le rayonnement gamma destiné à être détecté par le spectromètre gamma 4.

En fonction de l'énergie de chaque photon de l'impulsion UV, la capture d'un tel photon par le scintillateur 8 se traduit par l'émission d'un à plusieurs photons de fluorescence.

La qualité du transfert d'énergie par excitons de la matrice du scintillateur 8 vers les atomes du scintillateur dépend de la température du scintillateur 8. Par conséquent, le nombre de photons émis par le scintillateur 8 consécutivement à l'absorption, par le scintillateur 8, des photons émis par la source UV 18, est fonction de la température du scintillateur 8.

A titre d'exemple, dans le cas où le scintillateur 8 est constitué d'iodure de sodium dopé thallium NaI(TI), l'énergie d'ionisation du sodium, de l'iode et du thallium sont réciproquement de 5,14 eV (électronvolt), 10,45 eV et 6,11 eV. Dans le cas où la source UV 18 est configurée pour émettre un rayonnement ultraviolet de longueur d'onde 185 nm, l'énergie correspondante, à savoir 6,70 eV, est supérieure à la fois à l'énergie d'ionisation du sodium et à l'énergie des atomes du scintillateur que sont les atomes de thallium. L'ionisation du sodium par une telle source UV 18 conduit à une relaxation par un transfert d'énergie non radiatif, dans ce cas par le biais d'excitons, vers les atomes de thallium. L'efficacité d'un tel transfert d'énergie dépend de la température.

La source UV 18 est configurée pour générer des rayonnements UV sous forme d'impulsions de photons. Plus précisément, la source UV 18 est configurée pour émettre des impulsions de photons telles que le nombre de photons dans chaque impulsion de photons capturée par le scintillateur 8 engendre la génération de photons de fluorescence qui sont séparés, successivement dans le temps, par une durée inférieure ou égale au temps d'intégration du convertisseur électronique 10. Dans ce cas, la détection, par le spectromètre gamma 4, d'une impulsion de photons émise par la source UV 18 se traduit par la génération d'une unique impulsion dans le courant de scintillation délivré par le convertisseur électronique 10.

Chaque impulsion de photons présente une durée de l'ordre de quelques centaines de nanosecondes. En outre, chaque impulsion de photons comporte un nombre de photons tel que la durée séparant deux photons de fluorescence successifs générés au cours de la réception de ladite impulsion de photons par le scintillateur 8 est, par exemple, de l'ordre de la centaine de picosecondes.

La source UV 18 est, par exemple, une source impulsionnelle de rayonnement ultraviolet monochromatique.

En variante, la source UV 18 est une source non monochromatique. Par exemple, la source UV 18 est une ampoule remplie d'un gaz rare (par exemple, l'argon, le xénon, ou encore le krypton), dans laquelle des décharges électriques sont générées successivement au cours du temps, par exemple au moyen d'un système à bobines de Ruhmkorff.

Dans le cas où la source UV 18 est une source non monochromatique, le dispositif optique d'excitation 17 comporte, en outre, un filtre 24 est placé devant la source UV 18. Le filtre 24 est adapté pour empêcher la transmission, depuis la source UV 18 vers le scintillateur 8, des photons présentant une énergie strictement inférieure à l'énergie d'ionisation du scintillateur 8.

Une partie du flux de photons émis par la source UV 18 est destinée à éclairer le photodétecteur 20. La fraction du flux de photons émis par la source UV 8 qui est destinée à éclairer le photodétecteur 20 est constante dans le temps.

Par exemple, le photodétecteur 20 est directement placé dans le flux de photons émis par la source UV 18. Selon un autre exemple, le dispositif optique d'excitation 17 est équipé d'une lame semi-réfléchissante (non représentée) configurée pour réfléchir, en direction du photodétecteur 20, une partie du flux de photons émis par la source UV 18.

Le photodétecteur 20 est configuré pour générer un signal de référence qui est représentatif de caractéristiques du rayonnement de la source UV 18, en particulier représentatif d'un nombre de photons contenus dans chaque impulsion de photons émise par la source UV 18.

Le photodétecteur 20 est connecté à une deuxième entrée de l'unité de traitement 22 pour la transmission du signal de référence à l'unité de traitement 22.

Le calculateur 19 comprend l'unité de calcul 14 et l'unité de traitement 22 précédemment mentionnées.

L'unité de calcul 14 est connectée en sortie du convertisseur électronique 10 et est configurée pour analyser le courant de scintillation délivré par le convertisseur électronique 10.

L'unité de calcul 14 est configurée pour déterminer des caractéristiques du rayonnement absorbé par le scintillateur 8 à partir du courant de scintillation. Plus précisément, l'unité de calcul 14 est configurée pour déterminer un spectre du rayonnement ionisant capté par le scintillateur 8, par exemple du rayonnement gamma 3 de la source 5, en fonction du courant de scintillation délivré par le convertisseur électronique 10. Un tel spectre est, notamment, corrigé des éventuels effets de la température sur le fonctionnement de l'ensemble formé par le scintillateur 8 et le convertisseur électronique 10.

Le calcul du spectre du rayonnement gamma 3 de la source 5, dit « spectre gamma », sera décrit ultérieurement.

L'unité de traitement 22 est configurée pour déterminer, à partir du signal de référence et du courant de scintillation, une correction des effets de la température sur le fonctionnement du spectromètre gamma 4, destinée à être mise en œuvre par l'unité de calcul 14 pour le calcul du spectre gamma.

L'unité de traitement 22, illustrée par la figure 3, comporte un organe de calcul UV 26, un organe de calcul gamma 28 et un organe de synthèse 30.

L'organe de calcul UV 26 est connecté au photodétecteur 20 pour recevoir le signal de référence délivré par le photodétecteur 20.

L'organe de calcul UV 26 est configuré pour acquérir au cours du temps, durant une première durée d'observation prédéterminée, le signal de référence délivré par le photodétecteur 20. La première durée d'observation est susceptible de correspondre à une émission d'une pluralité d'impulsions de photons successives.

Avantageusement, l'organe de calcul UV 26 est synchronisé avec la source UV 18 de façon à acquérir le signal de référence, au cours de la première durée d'observation, uniquement durant les intervalles de temps correspondant à l'émission de photons par la source UV 18.

L'organe de calcul UV 26 est également configuré pour déterminer, au cours de la première durée d'observation, à partir du signal de référence acquis, une grandeur représentative du nombre de photons présents dans chaque impulsion de photons émise par la source UV 18.

Pour chaque impulsion de photons émise par la source UV 18, la grandeur représentative du nombre de photons présents dans l'impulsion de photons est, par exemple, le nombre de photons présents dans l'impulsion de photons lui-même.

Par exemple, pour chaque impulsion de photons, le nombre de photons présents dans l'impulsion de photons est pris égal au résultat de la multiplication, par un coefficient prédéterminé, d'une première grandeur caractéristique du signal de référence généré par le photodétecteur 20 lors de la réception de ladite impulsion de photons.

Le coefficient prédéterminé est une constante dépendant du photodétecteur 20.

La première grandeur caractéristique du signal de référence est, par exemple, une amplitude du signal de référence, ou une intégrale du signal de référence entre deux dates prédéterminées.

L'organe de calcul UV 26 est également configuré pour évaluer, à partir du nombre de photons dans chaque impulsion de photons, une distribution du nombre de photons dans les impulsions de photons, dite « distribution du nombre de photons ».

Plus précisément, l'organe de calcul UV 26 est configuré pour déterminer le nombre d'impulsions de photons qui, au cours de la première durée d'observation, ont contenu un nombre de photons appartenant à l'un parmi une pluralité de canaux de nombre de photons prédéterminés. Les canaux de nombre de photons sont, par la suite, appelés « canaux ».

Chaque canal est un intervalle de nombre de photons. Les canaux sont deux à deux disjoints, et tels que leur union forme un intervalle continu. Les canaux sont ordonnés par ordre croissant, chaque canal étant associé à un entier naturel égal à son rang, le plus petit rang étant nul.

L'organe de calcul UV 26 est également configuré pour déterminer, à l'issue de la première durée d'observation, le canal pour lequel le plus grand nombre d'impulsions de photons est obtenu. Un tel canal est appelé « centroïde UV ». Le nombre d'impulsions de photons correspondant au centroïde UV est appelé « maximum ».

L'organe de calcul UV 26 est également configuré pour déterminer, à l'issue de la première durée d'observation, une plage d'étalement de la distribution du nombre de photons.

Par « plage d'étalement », il est entendu, au sens de la présente invention, une plage de canaux, autour du centroïde UV, pour lesquels le nombre d'impulsions de photons correspondantes vérifie une condition prédéterminée vis-à-vis du maximum.

Par exemple, la plage d'étalement est prise comme étant l'ensemble continu des canaux autour du centroïde UV auxquels est associé un nombre d'impulsions de photons supérieur ou égal à la moitié du maximum.

L'organe de calcul UV 26 est également configuré pour calculer, à l'issue de la première durée d'observation, un nombre total A de photons, pris égal à la somme du nombre de photons de toutes les impulsions de photons dont le nombre de photons appartient à la plage d'étalement.

L'organe de calcul UV 26 est également configuré pour calculer, à l'issue de la première durée d'observation, un coefficient de normalisation Kuv, égal au résultat de la division du nombre total A de photons par un nombre total de photons de référence $A_0$ :

$$K_{UV} = \frac{A}{A_0}$$

La détermination du nombre total de photons de référence $A_0$ sera décrite ultérieurement.

Evidemment, l'invention prévoit que la grandeur représentative du nombre de photons présents dans chaque impulsion de photons soit une autre grandeur que le nombre de photons présents dans l'impulsion de photons lui-même. La grandeur représentative du nombre de photons présents dans chaque impulsion de photons est, par exemple, une énergie de l'impulsion de photons. Dans ce cas, les canaux sont des canaux d'énergie, associés à l'énergie des impulsions de photons, et la grandeur A est homogène à une énergie, et non à un nombre de photons.

L'organe de calcul gamma 28 est connecté au convertisseur électronique 10 pour recevoir le courant de scintillation délivré par le convertisseur électronique 10.

L'organe de calcul gamma 28 est configuré pour acquérir au cours du temps, durant une deuxième durée d'observation prédéterminée, le courant de scintillation délivré par le convertisseur électronique 10. La deuxième durée d'observation est susceptible de correspondre à une émission d'une pluralité d'impulsions de photons successives.

Avantageusement, l'organe de calcul gamma 28 est synchronisé avec la source UV 18 de façon à acquérir le courant de scintillation, au cours de la deuxième durée d'observation, uniquement durant les intervalles de temps correspondant à l'émission de photons par la source UV 18.

L'organe de calcul gamma 28 est également configuré pour calculer, pour chaque impulsion du courant de scintillation acquis au cours de la deuxième durée d'observation, une énergie de l'impulsion de photons à l'origine de ladite impulsion. En particulier, l'énergie d'une impulsion de photons associée à une impulsion donnée du courant de scintillation est prise égale au résultat de la multiplication, par un gain de référence $G_0$ prédéterminé, d'une deuxième grandeur caractéristique de l'impulsion.

La deuxième grandeur caractéristique d'une impulsion est, par exemple, une amplitude de l'impulsion, ou une intégrale de l'impulsion entre deux instants prédéterminés.

L'organe de calcul gamma 28 est également configuré pour calculer, à partir de l'énergie associée à chaque impulsion du courant de scintillation, un spectre du courant de scintillation, c'est-à-dire une distribution des énergies associées aux impulsions du courant de scintillation, en relation avec une pluralité de canaux d'énergie prédéterminés.

Chaque canal d'énergie est un intervalle d'énergie. Les canaux d'énergie sont deux à deux disjoints, et tels que leur union forme un intervalle continu. Les canaux d'énergie sont ordonnés par ordre croissant, chaque canal d'énergie étant associé à un entier naturel égal à son rang, le plus petit rang étant nul.

Pour chacun parmi la pluralité de canaux d'énergie, l'organe de calcul gamma 28 est configuré pour déterminer le nombre d'impulsions qui, au cours de la deuxième durée d'observation, ont présenté une énergie appartenant à la plage d'énergie correspondant audit canal d'énergie.

L'organe de calcul gamma 28 est également configuré pour déterminer, à l'issue de la deuxième durée d'observation, le canal d'énergie pour lequel le nombre d'impulsions correspondantes est maximal. Un tel canal d'énergie est appelé « centroïde gamma ».

De par la définition du centroïde gamma, le spectre calculé présente un pic pour l'énergie correspondante au centroïde gamma.

L'organe de calcul gamma 28 est également configuré pour calculer, à l'issue de la deuxième durée d'observation, un coefficient de correction $K_\gamma$, égal au résultat de la division du rang M du centroïde gamma par un rang de référence $M_0$ :

$$K_\gamma = \frac{M}{M_0}$$

La détermination du rang de référence $M_0$ sera décrite ultérieurement.

Le rang M est représentatif de l'énergie du pic associé au centroïde gamma. En variante, le coefficient de correction $K_\gamma$ est égal au résultat de la division d'une énergie associée au centroïde gamma (par exemple une borne du centroïde gamma, ou toute autre valeur prise dans le centroïde gamma) par une énergie de référence prédéterminée.

Avantageusement, chacune parmi la première durée d'observation et la deuxième durée d'observation est inférieure ou égale à une durée admise de variation de température du spectromètre gamma 4, par exemple égale à une minute.

Avantageusement, la première durée d'observation et la deuxième durée d'observation sont égales et synchrones, de sorte que l'organe de calcul UV 26 et l'organe de calcul gamma 28 déterminent simultanément le coefficient de normalisation Kuv et le coefficient de correction $K_\gamma$.

L'organe de synthèse 30 est connecté à l'organe de calcul UV 26 et l'organe de calcul gamma 28.

L'organe de synthèse 30 est configuré pour recevoir le coefficient de normalisation Kuv calculé par l'organe de calcul UV 26 à l'issue de la première durée d'observation et le coefficient de correction $K_\gamma$ calculé par l'organe de calcul gamma 28 à l'issue de la deuxième durée d'observation.

L'organe de synthèse 30 est également configuré pour calculer un gain G du spectromètre gamma 4. Le gain G est obtenu selon la formule (1) :

$$G = \frac{K_{UV}}{K_\gamma} G_0 \quad (1)$$

L'organe de synthèse 30 est également configuré pour transmettre, régulièrement au cours du temps, le gain G calculé à l'unité de calcul 14.

En variante, l'organe de synthèse 30 est configuré pour transmettre le gain G calculé à l'unité de calcul 14 lors d'une variation de l'un parmi le coefficient de normalisation $K_{UV}$ et le coefficient de correction $K_\gamma$.

Il convient de noter que le calculateur 19 est susceptible d'être formé par une ou plusieurs électronique(s) dédiée(s) ou par un ordinateur mettant en œuvre des logiciels de traitement appropriés.

Le fonctionnement de l'ensemble de spectrométrie gamma 2 va maintenant être décrit.

Au cours d'une étape de configuration du système d'étalonnage 6, des canaux de nombre de photons prédéterminés et des canaux d'énergie prédéterminés sont respectivement enregistrés dans l'unité de calcul 14, l'organe de calcul UV 26 et l'organe de calcul gamma 28.

Puis, l'ensemble de spectrométrie gamma 2 est amené et maintenu à une température de configuration prédéterminée. Par exemple, la température d'étalonnage est comprise entre -10°C (degré Celsius) et 50°C.

Puis, la source UV 18 est mise en marche, de façon à émettre, successivement au cours du temps, des impulsions de photons qui se propagent jusqu'au scintillateur 8.

Une partie de chaque impulsion de photons est détectée par le photodétecteur 20, ce qui résulte en la génération du signal de référence. Le signal de référence est acheminé vers l'organe de calcul UV 26 de l'unité de traitement 22.

En outre, l'autre partie de l'impulsion de photons se propage jusqu'au scintillateur 8, directement ou, si le filtre 24 est présent, après avoir traversé le filtre 24.

Chaque photon issu par de la source UV 18 et parvenant au scintillateur 8 entraîne une ionisation de la matrice du scintillateur 8. La matrice du scintillateur 8 se désexcite par transmission d'énergie aux atomes du scintillateur, au moyen d'excitons. Puis, les atomes du scintillateur se désexcitent en émettant chacun un photon de fluorescence.

Au vu des caractéristiques précédemment décrites de la source UV 18, l'écart temporel entre les photons de fluorescence générés par une même impulsion de photons est inférieur au temps d'intégration du convertisseur électronique 10. Dans ce cas, la détection, par le convertisseur électronique 10, des photons de fluorescence générés par l'impulsion de photons résulte en l'apparition, dans le courant de scintillation délivré par le convertisseur électronique 10, d'une impulsion unique, représentative d'une impulsion de photons dans son ensemble.

Le courant de scintillation est acheminé simultanément vers l'unité de calcul 14 et l'organe de calcul gamma 28 de l'unité de traitement 22.

L'organe de calcul UV 26 acquiert, durant une première durée d'étalonnage prédéterminée, le signal de référence délivré par le photodétecteur 20. La première durée d'étalonnage est, par exemple, égale à la première durée d'observation.

En outre, au cours de la première durée d'étalonnage, l'organe de calcul UV 26 détermine le nombre de photons présents dans chaque impulsion de photons, à partir du signal de référence acquis.

L'organe de calcul UV 26 évalue également la distribution du nombre de photons dans les impulsions de photons générées par la source UV 18 au cours de la première durée d'étalonnage.

Puis, à l'issue de la première durée d'étalonnage, l'organe de calcul UV 26 détermine le centroïde UV et la plage d'étalement de la distribution du nombre de photons.

Puis, l'organe de calcul UV 26 calcule le nombre total A de photons. La valeur du nombre total A de photons qui est obtenue à l'issue de l'étape de configuration est assignée au nombre total de photons de référence $A_0$ et enregistrée dans l'organe de calcul UV 26.

En outre, au cours de l'étape de configuration, l'organe de calcul gamma 28 acquiert, durant une deuxième durée d'étalonnage prédéterminée, le courant de scintillation délivré par le convertisseur électronique 10. La deuxième durée d'étalonnage est, par exemple, égale à la deuxième durée d'observation.

En outre, au cours de la deuxième durée d'étalonnage, l'organe de calcul gamma 28 détermine l'énergie de l'impulsion de photons UV à l'origine de chaque impulsion dans le courant de scintillation.

L'organe de calcul gamma 28 calcule également, au cours de la deuxième durée d'étalonnage, le spectre du courant de scintillation acquis au cours de la deuxième durée d'étalonnage.

Puis, à l'issue de la deuxième durée d'étalonnage, l'organe de calcul gamma 28 détermine le centroïde gamma du spectre du courant de scintillation, et le rang M du centroïde gamma.

La valeur du rang M du centroïde gamma qui est obtenue à l'issue de l'étape de configuration est assignée au rang de référence $M_0$ et enregistrée dans l'organe de calcul gamma 28.

Puis, au cours d'une étape ultérieure de mesure, l'ensemble de spectrométrie gamma 2 est mis en présence d'une source 5 de rayonnement gamma 3, et la source UV 18 est mise en marche.

L'organe de calcul UV 26 acquiert le signal de référence délivré par le photodétecteur 20, au cours d'une pluralité de premiers cycles successifs présentant chacun une durée égale à la première durée d'observation. De préférence, l'organe de calcul UV 26 acquiert le signal de référence, au cours de chaque premier cycle, uniquement pendant l'émission de photons par la source UV 18.

En outre, au cours de chaque premier cycle, l'organe de calcul UV 26 détermine, à partir du signal de référence acquis, le nombre de photons présents dans chaque impulsion de photons émise par la source UV 18.

L'organe de calcul UV 26 évalue également la distribution du nombre de photons dans les impulsions de photons générées par la source UV 18 au cours de chaque premier cycle.

Puis, à l'issue de chaque premier cycle, l'organe de calcul UV 26 détermine le centroïde UV et l'étalement de la distribution du nombre de photons dans les impulsions de photons émises par la source UV 18.

Puis, l'organe de calcul UV 26 calcule le nombre total A de photons.

Puis, l'organe de calcul UV 26 calcule la valeur courante du coefficient de normalisation Kuv et transmet la valeur calculée du coefficient de normalisation Kuv à l'organe de synthèse 30.

En outre, l'organe de calcul gamma 28 acquiert le courant de scintillation délivré par le convertisseur électronique 10, au cours d'une pluralité de deuxièmes cycles successifs présentant chacun une durée égale à la deuxième durée d'observation. De préférence, l'organe de calcul gamma 28 acquiert le courant de scintillation, au cours de chaque deuxième cycle, uniquement pendant l'émission de photons par la source UV 18.

En outre, au cours de chaque deuxième cycle, l'organe de calcul gamma 28 détermine l'énergie de l'impulsion de photons UV à l'origine de chaque impulsion dans le courant de scintillation acquis.

L'organe de calcul gamma 28 détermine également le spectre du courant de scintillation résultant de la détection des impulsions de photons émises par la source UV 18 au cours de chaque deuxième cycle.

Puis, à l'issue de chaque deuxième cycle, l'organe de calcul gamma 28 détermine le centroïde gamma du spectre du courant de scintillation, et le rang du centroïde gamma.

Puis, l'organe de calcul gamma 28 calcule la valeur courante du coefficient de correction $K_\gamma$ et transmet la valeur calculée du coefficient de correction $K_\gamma$ à l'organe de synthèse 30

L'organe de synthèse 30 reçoit chaque valeur calculée du coefficient de normalisation $K_{UV}$ et du coefficient de correction $K_\gamma$.

Puis, l'organe de synthèse 30 calcule, régulièrement au cours du temps, la valeur du gain G à partir des valeurs courantes du coefficient de normalisation Kuv et du coefficient de correction $K_\gamma$ reçues en provenance de l'organe de calcul UV 26 et de l'organe de calcul gamma 28, respectivement.

Puis, l'organe de synthèse 30 transmet la valeur calculée du gain G à l'unité de calcul 14.

Simultanément, chaque photon gamma émis par la source 5 est capté par le scintillateur 8, ce qui résulte en l'émission, par le scintillateur 8, d'un train de photons de fluorescence correspondant. Chaque train de photons de fluorescence est détecté par le convertisseur électronique 10, ce qui se traduit par l'apparition, dans le courant de scintillation délivré par le convertisseur électronique 10, d'une impulsion correspondant au train de photons.

Par « train de photons de fluorescence », il est entendu, au sens de la présente invention, un ensemble de photons émis au cours de l'interaction d'un même photon gamma avec le scintillateur 8. La durée séparant deux photons de fluorescence successifs d'un train de photons de fluorescence est, en général, inférieure au temps d'intégration du convertisseur électronique 10.

L'unité de calcul 14 acquiert, au cours du temps, le courant de scintillation généré par le convertisseur électronique 10.

Avantageusement, l'unité de calcul 14 est synchronisée avec la source UV 18 de façon à acquérir le courant de scintillation uniquement lorsque la source UV 18 n'émet pas d'impulsions de photons, de sorte que le courant de scintillation acquis par l'unité de calcul 14 soit uniquement représentatif du rayonnement gamma 3 de la source 5.

En outre, au cours du temps, l'unité de calcul 14 reçoit, en provenance de l'organe de synthèse 30, la valeur du gain G et la mémorise.

Au cours du temps, l'unité de calcul 14 détermine, à partir de chaque impulsion du courant de scintillation, une énergie du photon gamma, issu de la source 5, dont la capture par le scintillateur 8 a conduit à la génération de ladite impulsion.

L'énergie du photon à l'origine d'une impulsion donnée du courant de scintillation acquis par l'unité de calcul 14 est prise égale au résultat de la multiplication d'une troisième grandeur caractéristique de l'impulsion par la valeur courante du gain G reçu en provenance de l'organe de synthèse 30.

La troisième grandeur caractéristique d'une impulsion est, par exemple, une amplitude de l'impulsion, ou une intégrale de l'impulsion entre deux moments prédéterminés.

En outre, l'unité de calcul 14 calcule le spectre gamma comme étant un spectre du courant de scintillation acquis par l'unité de calcul 14. Un tel calcul est similaire au calcul de spectre mis en œuvre par l'organe de calcul gamma 28, à la différence près que l'unité de calcul 14 ne calcule pas un nouveau spectre gamma à intervalles réguliers.

Le spectre gamma calculé par l'unité de calcul 14 constitue le spectre du rayonnement 3 de la source 5.

Puis, le spectre gamma est, par exemple, transmis à un afficheur (non représenté) pour une visualisation par un opérateur, ou encore stocké dans une mémoire pour un traitement ultérieur.

En variante, dans le cas où la source UV 18 est apte à émettre des impulsions de photons dans lesquelles le nombre de photons est constant dans le temps, en particulier quelles que soient les conditions de température, le photodétecteur 20 et l'organe de calcul UV 26 sont optionnels, le coefficient de normalisation Kuv étant pris unitaire.

En variante, la source UV 18 est apte à émettre des impulsions de photons de durées différentes prédéterminées, et/ou d'intensités différentes prédéterminées, correspondant à des nombres de photons respectifs distincts. Dans ce cas, la distribution du nombre de photons calculée par l'organe de calcul UV 26 comporte une pluralité de pics, chacun associé à une durée et/ou une intensité correspondante. Dans ce cas, le spectre calculé par l'organe de calcul gamma 28 comporte également une pluralité de pics, chacun étant associé à une durée et/ou une intensité correspondante.

Dans ce cas, l'organe de calcul UV 26 est, avantageusement, configuré pour déterminer, pour chaque durée d'impulsion de photons, un centroïde UV et un étalement correspondants dans la distribution du nombre de photons. Le nombre total A de photons est, par exemple, pris égal au total du nombre de photons dans chacun des étalements.

En outre, dans ce cas, l'organe de calcul gamma 28 est, avantageusement, configuré pour déterminer, dans le spectre calculé par l'organe de calcul gamma 28, une pluralité de centroïdes gamma, chacun associé à une durée et/ou une énergie d'impulsion de photons correspondante. Le rang de chaque centroïde gamma est destiné à être comparé à un rang de référence respectif. Par exemple, le coefficient de correction $K_\gamma$ est égal à la moyenne des rapports de chaque rang de centroïde gamma sur le rang de référence respectif.

En variante, l'organe de calcul UV 26 n'est pas configuré pour calculer l'étalement. Dans ce cas, le nombre total de photons est pris égal à la somme du nombre de photons de toutes les impulsions de photons dont le nombre de photons appartient au centroïde. Selon une autre variante, le coefficient de normalisation Kuv est pris égal au rapport du rang du centroïde UV sur un rang de référence.

Le prélèvement d'une partie du rayonnement émis par la source UV 18 rend possible un suivi, au cours du temps, des fluctuations de l'énergie des impulsions de photons émises par la source UV 18, par rapport à une énergie de référence. Le calcul du coefficient de normalisation Kuv autorise une correction de ces fluctuations par l'injection du coefficient de normalisation Kuv dans la formule du calcul du gain G.

## Revendications

1. Procédé d'étalonnage d'un spectromètre gamma (4) à scintillateur (8), le procédé comportant :

   - émission, à destination du spectromètre gamma, d'un rayonnement UV sous forme d'impulsions de photons dans lequel, pour chaque impulsion de photons, chaque photon présente une énergie supérieure ou égale à une énergie d'ionisation du scintillateur, les impulsions de photons étant aptes à générer, lors de leur réception par le spectromètre gamma (4), un spectre présentant au moins un pic d'intérêt à une énergie de référence correspondante ;
   - à partir d'un courant de scintillation résultant d'une détection des impulsions de photons par le spectromètre gamma (4), calcul d'un spectre présentant chaque pic d'intérêt à une énergie mesurée correspondante ;
   - pour chaque pic d'intérêt, première comparaison de l'énergie mesurée correspondante avec l'énergie de référence correspondante ; et
   - à partir du résultat de la première comparaison, détermination d'un gain (G) du spectrogramme gamma (4) pour faire correspondre, pour chaque pic d'intérêt, l'énergie mesurée correspondante avec l'énergie de référence correspondante.

2. Procédé d'étalonnage selon la revendication 1, dans lequel le gain (G) est proportionnel à un gain de référence prédéterminé, divisé par un coefficient de correction ($K_\gamma$) qui est représentatif du résultat de la première comparaison.

3. Procédé d'étalonnage selon la revendication 1, comportant, en outre :

   - prélèvement d'une partie du rayonnement UV ;
   - à partir d'un signal de référence résultant d'une détection, par un photodétecteur (20) distinct du spectromètre gamma (4), de la partie du rayonnement UV prélevée, calcul de la valeur d'au moins une grandeur représentative du nombre de photons présents dans chaque impulsion de photons ;
   - pour chaque grandeur représentative, deuxième comparaison de la valeur calculée correspondante avec une valeur prédéterminée correspondante ;
   - détermination d'un coefficient de normalisation (Kuv) représentatif d'un résultat de la deuxième comparaison ;

dans lequel, lors de la détermination du gain (G) du spectrogramme gamma (4), le gain (G) est pris égal à un gain de référence prédéterminé, divisé par un coefficient de correction ($K_\gamma$) qui est représentatif du résultat de la première comparaison, et multiplié par un coefficient de normalisation (Kuv) qui est représentatif du résultat de la deuxième comparaison.

4. Procédé de mesure d'un spectre gamma d'une source (5) de rayonnement gamma (3) au moyen d'un spectromètre gamma (4) à scintillateur (8), le procédé comprenant les étapes :

   - détermination d'un gain (G) du spectromètre gamma (4) par la mise en œuvre d'un procédé d'étalonnage selon l'une quelconque des revendications 1 à 3 ;
   - réception, par le spectromètre gamma, du rayonnement gamma (3) émis par la source (5) ;
   - mise en œuvre du gain (G) déterminé pour calculer un spectre gamma de la source (5).

5. Système d'étalonnage (6) d'un spectromètre gamma (4) à scintillateur (8), le système d'étalonnage (6) comportant un dispositif optique d'excitation (17) et un calculateur (19),
   le dispositif optique d'excitation (17) étant configuré pour émettre, à destination du spectromètre gamma (4), un rayonnement UV sous forme d'impulsions de photons dans lequel, pour chaque impulsion de photons, chaque photon présente une énergie supérieure ou égale à une énergie d'ionisation du scintillateur (8), les impulsions de photons étant aptes à générer, lors de leur réception par le spectromètre gamma (4), un spectre présentant au moins un pic d'intérêt à une énergie de référence correspondante,
   le calculateur (19) étant configuré pour :

   - calculer, à partir d'un courant de scintillation résultant d'une détection des impulsions de photons par le spectromètre gamma (4), un spectre présentant chaque pic d'intérêt à une énergie mesurée correspondante ;
   - mettre en œuvre, pour chaque pic d'intérêt, une première comparaison de l'énergie mesurée correspondante avec l'énergie de référence correspondante ; et
   - déterminer, à partir du résultat de la première comparaison, un gain (G) du spectrogramme gamma (4) pour faire correspondre, pour chaque pic d'intérêt, l'énergie mesurée correspondante avec l'énergie de référence correspondante.

6. Système d'étalonnage (6) selon la revendication 5, dans lequel le gain (G) est proportionnel à un gain de référence prédéterminé, divisé par un coefficient de correction ($K_\gamma$) qui est représentatif du résultat de la première comparaison.

7. Système d'étalonnage (6) selon la revendication 5, dans lequel le dispositif optique d'excitation (17) comporte un photodétecteur (20) configuré pour prélever une partie du rayonnement UV et pour générer un signal de référence résultant d'une détection de la partie du rayonnement UV prélevée,
   le calculateur (19) étant également configuré pour :

   - calculer, à partir du signal de référence, la valeur d'au moins une grandeur représentative du nombre de photons présents dans chaque impulsion de photons;
   - mettre en œuvre, pour chaque grandeur représentative, une deuxième comparaison de la valeur calculée correspondante avec une valeur prédéterminée correspondante ;
   - déterminer un coefficient de normalisation (Kuv) représentatif d'un résultat de la deuxième comparaison ;

   le gain (G) étant pris égal à un gain de référence prédéterminé, divisé par un coefficient de correction ($K_\gamma$) qui est représentatif du résultat de la première comparaison, et multiplié par le coefficient de normalisation (Kuv).

8. Système d'étalonnage (6) selon l'une quelconque des revendications 5 à 7, dans lequel le calculateur (19) est configuré pour :

   - recevoir, en provenance du spectromètre gamma (4), un courant de scintillation résultant d'une détection, par le spectromètre gamma (4), d'un rayonnement gamma (3) émis par une source (5) de rayonnement gamma ;
   - calculer un spectre gamma de la source (5) à partir du courant de scintillation reçu.

9. Ensemble de spectrométrie gamma (2) comportant un spectromètre gamma (4), et un système d'étalonnage (6) selon l'une quelconque des revendications 5 à 8, une entrée du calculateur (19) étant reliée à une sortie du spectromètre gamma (4).

**Patentansprüche**

1. Verfahren zum Kalibrieren eines Gammaspektrometers (4) mit Szintillator (8), wobei das Verfahren umfasst:

   - Emission von UV-Strahlung in Form von Photonenimpulsen an das Gammaspektrometer, wobei für jeden Photonenimpuls jedes Photon eine Energie aufweist, die größer oder gleich einer Ionisierungsenergie des Szintillators ist, wobei die Photonenimpulse dazu geeignet sind, bei ihrem Empfang durch das Gammaspektrometer (4) ein Spektrum zu erzeugen, das zumindest einen interessierenden Peak bei einer entsprechenden Referenzenergie aufweist;

- ausgehend von einem Szintillationsstrom, der aus einer Detektion der Photonenimpulse durch das Gammaspektrometer (4) resultiert, Berechnen eines Spektrums, das jeden interessierenden Peak bei einer entsprechenden gemessenen Energie aufweist;

- für jeden interessierenden Peak, Durchführen eines ersten Vergleichs der entsprechenden gemessenen Energie mit der entsprechenden Referenzenergie; und

- ausgehend von dem Ergebnis des ersten Vergleichs Bestimmen einer Verstärkung (G) des Gammaspektrogramms (4), um für jeden interessierenden Peak die entsprechende gemessene Energie mit der entsprechenden Referenzenergie abzugleichen.

2. Kalibrierverfahren nach Anspruch 1, wobei die Verstärkung (G) proportional zu einer vorbestimmten Referenzverstärkung geteilt durch einen Korrekturkoeffizienten ($K_\gamma$) ist, der repräsentativ für das Ergebnis des ersten Vergleichs ist.

3. Kalibrierverfahren nach Anspruch 1, ferner umfassend:

- Abgreifen eines Teils der UV-Strahlung ;

- ausgehend von einem Referenzsignal, das aus einer Detektion des abgegriffenen Teils der UV-Strahlung durch einen vom Gammaspektrometer (4) separaten Photodetektor (20) resultiert, Berechnen des Wertes zumindest einer Größe, die für die Anzahl der in jedem Photonenimpuls vorhandenen Photonen repräsentativ ist;

- für jede repräsentative Größe Durchführen eines zweiten Vergleichs des entsprechenden berechneten Wertes mit einem entsprechenden vorbestimmten Wert;

- Bestimmen eines Normalisierungskoeffizienten ($K_{UV}$), der repräsentativ für ein Ergebnis des zweiten Vergleichs ist;

wobei beim Bestimmen der Verstärkung (G) des Gammaspektrogramms (4) die Verstärkung (G) gleich einer vorbestimmten Referenzverstärkung, dividiert durch einen Korrekturkoeffizienten ($K_\gamma$), der repräsentativ für das Ergebnis des ersten Vergleichs ist, und multipliziert mit einem Normalisierungskoeffizienten ($K_{UV}$), der repräsentativ für das Ergebnis des zweiten Vergleichs ist, genommen wird.

4. Verfahren zum Messen eines Gammaspektrums einer Quelle (5) von Gammastrahlung (3) mittels eines Gammaspektrometers (4) mit Szintillator (8), wobei das Verfahren die folgenden Schritte umfasst:

- Bestimmen einer Verstärkung (G) des Gammaspektrometers (4) mittels Durchführung eines Kalibrierverfahrens nach einem der Ansprüche 1 bis 3;

- Empfangen der von der Quelle (5) emittierten Gammastrahlung (3) durch das Gammaspektrometer;

- Anwenden der bestimmten Verstärkung (G) zum Berechnen eines Gammaspektrums der Quelle (5).

5. Kalibriersystem (6) für ein Gammaspektrometer (4) mit Szintillator (8), wobei das Kalibriersystem (6) eine optische Anregungsvorrichtung (17) und einen Rechner (19) enthält, wobei die optische Anregungsvorrichtung (17) dazu ausgelegt ist, an das Gammaspektrometer (4) eine UV-Strahlung in Form von Photonenimpulsen zu emittieren, wobei für jeden Photonenimpuls jedes Photon eine Energie aufweist, die größer oder gleich einer Ionisierungsenergie des Szintillators (8) ist, wobei die Photonenimpulse dazu geeignet sind, bei ihrem Empfang durch das Gammaspektrometer (4) ein Spektrum zu erzeugen, das zumindest einen interessierenden Peak bei einer entsprechenden Referenzenergie aufweist, wobei der Rechner (19) ausgelegt ist zum

- Berechnen eines Spektrums, das jeden interessierenden Peak bei einer entsprechenden gemessenen Energie aufweist, ausgehend von einem Szintillationsstrom, der aus einer Detektion der Photonenimpulse durch das Gammaspektrometer (4) resultiert;

- Durchführen, für jeden interessierenden Peak, eines ersten Vergleichs der entsprechenden gemessenen Energie mit der entsprechenden Referenzenergie; und

- Bestimmen einer Verstärkung (G) des Gammaspektrogramms (4) aus dem Ergebnis des ersten Vergleichs, um für jeden interessierenden Peak die entsprechende gemessene Energie mit der entsprechenden Referenzenergie abzugleichen.

6. Kalibriersystem (6) nach Anspruch 5, wobei die Verstärkung (G) proportional zu einer vorbestimmten Referenzverstärkung geteilt durch einen Korrekturkoeffizienten ($K_\gamma$) ist, der für das Ergebnis des ersten Vergleichs repräsentativ ist.

7. Kalibriersystem (6) nach Anspruch 5, wobei die optische Anregungsvorrichtung (17) einen Photodetektor (20) enthält, der dazu ausgelegt ist, einen Teil der UV-Strahlung abzugreifen und ein Referenzsignal zu erzeugen, das aus einer Detektion des abgegriffenen Teils der UV-Strahlung resultiert,
wobei der Rechner (19) auch ausgelegt ist zum

- Berechnen des Wertes von zumindest einer Größe, die für die Anzahl der in jedem Photonenimpuls vorhandenen Photonen repräsentativ ist, ausgehend von dem Referenzsignal;
- Durchführen, für jede repräsentative Größe, eines zweiten Vergleichs des entsprechenden berechneten Wertes mit einem entsprechenden vorbestimmten Wert;
- Bestimmen eines Normalisierungskoeffizienten ($K_{UV}$), der repräsentativ für ein Ergebnis des zweiten Vergleichs ist;

wobei die Verstärkung (G) gleich einer vorbestimmten Referenzverstärkung geteilt durch einen Korrekturkoeffizienten ($K_\gamma$), der repräsentativ für das Ergebnis des ersten Vergleichs ist, und multipliziert mit dem Normalisierungskoeffizienten ($K_{UV}$), genommen wird.

8. Kalibriersystem (6) nach einem der Ansprüche 5 bis 7, wobei der Rechner (19) ausgelegt ist zum

- Empfangen eines Szintillationsstroms vom Gammaspektrometer (4), der aus einer Detektion einer Gammastrahlung (3), die von einer Gammastrahlungsquelle (5) emittiert wird, durch das Gammaspektrometer (4) resultiert;
- Berechnen eines Gammaspektrums der Quelle (5) ausgehend von dem empfangenen Szintillationsstrom.

9. Gammaspektrometrieanordnung (2) mit einem Gammaspektrometer (4) und einem Kalibriersystem (6) nach einem der Ansprüche 5 bis 8, wobei ein Eingang des Rechners (19) mit einem Ausgang des Gammaspektrometers (4) verbunden ist.

**Claims**

1. A method for calibration of a scintillator (8) gamma spectrometer (4), the method including:

- emission, to the gamma spectrometer, of UV radiation in the form of photon pulses wherein, for each photon pulse, each photon has an energy greater than or equal to an ionisation energy of the scintillator, the photon pulses being able to generate, when they are received by the gamma spectrometer (4), a spectrum having at least one peak of interest at a corresponding reference energy;
- from a scintillation current resulting from a detection of the photon pulses by the gamma spectrometer (4), calculation of a spectrum having each peak of interest at a corresponding measured energy;
- for each peak of interest, first comparison of the corresponding measured energy with the corresponding reference energy; and
- from the result of the first comparison, determination of a gain (G) of the gamma spectrogram (4) to match, for each peak of interest, the corresponding measured energy with the corresponding reference energy.

2. The calibration method according to claim 1, wherein the gain (G) is proportional to a predetermined reference gain, divided by a correction coefficient ($K_\gamma$) which is representative of the result of the first comparison.

3. The calibration method according to claim 1, further including,

- sampling of part of the UV radiation;
- from a reference signal resulting from a detection, by a photodetector (20) separate from the gamma spectrometer (4), of the part of the UV radiation sampled, calculation of the value of at least one quantity representative of the number of photons present in each photon pulse;
- for each representative quantity, second comparison of the corresponding calculated value with a corresponding predetermined value;
- determination of a normalisation coefficient ($K_{UV}$) representative of a result of the second comparison;

wherein, when determining the gain (G) of the gamma spectrogram (4), the gain (G) is taken equal to a predetermined reference gain, divided by a correction coefficient ($K_\gamma$) which is representative of the result of the first comparison, and multiplied by a normalisation coefficient ($K_{UV}$) which is representative of the result of the second comparison.

4. A method for measuring a gamma spectrum of a source (5) of gamma radiation (3) by means of a scintillator (8) gamma spectrometer (4), the method comprising the steps:

- determination of a gain (G) of the gamma spectrometer (4) by implementing a calibration method according to any one of claims 1 to 3;
- reception, by the gamma spectrometer, of the gamma radiation (3) emitted by the source (5);
- implementation of the gain (G) determined to calculate a gamma spectrum of the source (5).

5. A system (6) for calibration of a scintillator (8) gamma spectrometer (4), the calibration system (6) including an optical excitation device (17) and a calculator (19),

the optical excitation device (17) being configured to emit, to the gamma spectrometer (4), a UV radiation in the form of photon pulses wherein, for each photon pulse, each photon has an energy greater than or equal to an ionisation energy of the scintillator (8), the photon pulses being able to generate, when they are received by the gamma spectrometer (4), a spectrum having at least one peak of interest at a corresponding reference energy,

the calculator (19) being configured to:

- calculate, from a scintillation current resulting from a detection of the photon pulses by the gamma spectrometer (4), a spectrum having each peak of interest at a corresponding measured energy;
- implement, for each peak of interest, a first comparison of the corresponding measured energy with the corresponding reference energy; and
- determine, from the result of the first comparison, a gain (G) of the gamma spectrogram (4) to match, for each peak of interest, the corresponding measured energy with the corresponding reference energy.

6. The calibration system (6) according to claim 5, wherein the gain (G) is proportional to a predetermined reference gain, divided by a correction coefficient ($K_\gamma$) which is representative of the result of the first comparison.

7. The calibration system (6) according to claim 5, wherein the optical excitation device (17) includes a photodetector (20) configured to sample part of the UV radiation and to generate a reference signal resulting from a detection of the part of UV radiation sampled,

the calculator (19) also being configured to:

- calculate, from the reference signal, the value of at least one quantity representative of the number of photons present in each photon pulse;
- implement, for each representative quantity, a second comparison of the corresponding calculated value with a corresponding predetermined value;
- determine a normalisation coefficient ($K_{UV}$) representative of a result of the second comparison;

the gain (G) being taken equal to a predetermined reference gain, divided by a correction coefficient ($K_\gamma$) which is representative of the result of the first comparison, and multiplied by the normalisation coefficient ($K_{UV}$).

8. The calibration system (6) according to any one of claims 5 to 7, wherein the calculator (19) is configured to:

- receive, from the gamma spectrometer (4), a scintillation current resulting from a detection, by the gamma spectrometer (4), of a gamma radiation (3) emitted by a source (5) of gamma radiation;
- calculate a gamma spectrum of the source (5) from the scintillation current received.

9. A gamma spectrometry assembly (2) including a gamma spectrometer (4), and a calibration system (6) according to any one of claims 5 to 8, an input of the calculator (19) being connected to an output of the gamma spectrometer (4).

FIG. 1

FIG. 2

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0965861 A1

**Littérature non-brevet citée dans la description**

- *IEEE transactions on nuclear science,* vol. 44 (3), 568-571